# EUROPEAN PATENT APPLICATION

(11) **EP 4 835 390 A1**
(43) Date of publication of application: **04.11.2026**
(21) Application number: 26174962.6
(22) Date of filing: 28.04.2026
(51) Int. Cl.: F28D 1/053, F02C 7/18, F02K 3/115, F28D 1/02, F28D 21/00

(54) **PRECOOLER**

(30) Priority: 30.04.2025 US 202519195435
(71) Applicant: Honeywell International Inc., Charlotte, NC 28202 (US)
(72) Inventor: MALDONADO COMAS, Rafael, Charlotte 28202 (US); BORGHESE, Joseph, Charlotte 28202 (US); DO, Quang, Charlotte 28202 (US); ARSLAN, Nurullah, Charlotte 28202 (US); KUMAGAI, Gary Hiroshi, Charlotte 28202 (US)
(74) Representative: Haseltine Lake Kempner LLP

(57) **Abstract**

A precooler for cooling a target fluid with a cooling fluid includes a housing defining a cooling fluid inlet and a first cooling fluid outlet defining a first cooling fluid flow path. The cooling fluid inlet and a second cooling fluid outlet defined by the housing also defines a second cooling fluid flow path. A plane of the first cooling fluid outlet and a plane of the second cooling fluid outlet form a V-shape. The precooler also includes a tube assembly positioned at the first cooling fluid outlet and the second cooling fluid outlet, and the tube assembly includes a first plurality of tubes positioned within the first cooling fluid flow path and a second plurality of tubes positioned within the second cooling fluid flow path. The plurality of tubes is configured to flow the target fluid.

## Description

### TECHNICAL FIELD

The present disclosure relates to heat exchangers, such as a precooler.

### BACKGROUND

A heat exchanger may be positioned within supply and bypass fluid streams of a fluid handling system in order to cool or heat the supply or bypass fluids. A precooler is a heat exchanger that cools hot supply fluid using bypass fluid. In aircraft, a precooler is a heat exchanger that cools hot engine bleed air using fan air, and the heat exchanger often must fit within a constrained volume within the engine housing or an engine support housing.

### SUMMARY

In general, the disclosure describes precoolers and methods of making and/or using precoolers. Precoolers for aircraft engines may be heavy, relatively large, and need to be positioned within a restricted volume, e.g., within or near the engine without impeding engine performance and positioned along with other structures supporting engine function, e.g., pipes, tubes, electrical and/or pneumatic cabling, structure support beams, and the like.

In accordance with one or more aspects of this disclosure, a precooler may include flow paths for hot and cold fluids, enabling sizing and shaping of the precooler to fit within a restricted volume. The precooler may be made with lighter weight materials and components configured to mitigate negative effects of thermal cycling, thermal fatigue, as well as low frequency and high frequency vibrations, such as from use of the precooler for a vehicle, e.g., an aircraft.

In some examples, a precooler may include a housing defining a cooling fluid flow path that splits into two flow paths, or two cooling fluid path segments, where the segments are arranged in a V-shape. Each of the segments may comprise a cooling fluid path outlet (e.g., first and second cooling fluid path outlets) defining a plane having a cross-sectional area, each of the planes of the first and second segments forming a V-shape. Each of the first and second cooling fluid path outlets may also have a path length, such that the first and second cooling fluid path outlets define a volume, e.g., first and second volumes corresponding to the first and second cooling fluid path outlets. The precooler may include a tube assembly including a first plurality of tubes positioned within the first volume of the first cooling fluid path outlet and a second plurality of tubes positioned within the second volume of the second cooling fluid path outlet. This tube assembly may have a higher surface area density compared to other heat exchange interfaces, such as plate fin assemblies, such that the precooler may have a lower weight and volume for a similar cooling capacity.

The tube assembly may define a hot fluid flow path, e.g., for cooling a hot fluid, also referred to as a target fluid targeted for cooling and/or targeted for use in an application. Each tube of the first and second plurality of tubes may define a lumen fluidically coupled to a target fluid inlet and a target fluid outlet. The first and second plurality of tubes may be configured to allow a cooling fluid to flow through gaps between the first and second plurality of tubes of each of the first and second cooling fluid outlets forming the V-shape. For example, the precooler may define the first and second cooling fluid outlets such that the cooling fluid may flow externally to the tubes of the tube assembly and along and/or in contact with outer surfaces of the tubes of the tube assembly, e.g., to fluidically contact external surfaces of the tubes so as to transfer heat between the target (e.g., hot) fluid and cooling fluid via the tube walls as a thermally conductive intermediate material. Each tube of the tube assembly may comprise a longitudinal axis that is substantially perpendicular to the direction of flow of the cooling fluid within the first or second cooling fluid outlets.

Aspects of this disclosure may provide one or more technical advantages and solve one or more technical problems. For example, the systems and techniques disclosed herein may enable precooling within a restricted envelope (e.g., a restricted volume), reduce precooler weight, and improve precooler robustness to both thermal fatigue and mechanical fatigue, e.g., low cycle fatigue from thermal cycling via increase and decrease in the temperature of a precooler and/or precooler components such as during flight cycles, and/or fatigue due to low frequency or high frequency vibrations. In some examples, precoolers and precooling disclosed herein may provide improved thermal transfer and precooling efficiency, and/or improved engine performance when installed to cool engine bleed air of an aircraft engine.

In one example, a precooler for cooling a target fluid with a cooling fluid includes: a housing defining: a cooling fluid inlet and a first cooling fluid outlet defining a first cooling fluid flow path; and the cooling fluid inlet and a second cooling fluid outlet defining a second cooling fluid flow path, wherein a plane of the first cooling fluid outlet and a plane of the second cooling fluid outlet form a V-shape; and a tube assembly positioned at the first cooling fluid outlet and the second cooling fluid outlet, wherein the tube assembly includes a first plurality of tubes positioned within the first cooling fluid flow path and a second plurality of tubes positioned within the second cooling fluid flow path, and wherein the plurality of tubes is configured to flow the target fluid.

In another example, a system includes: an engine; and a precooler for cooling engine bleed air with ram air includes a housing includes a ram air inlet and a first ram air fluid outlet defining a first ram air fluid flow path; and the ram air inlet and a second ram air outlet defining a second ram air flow path, wherein a plane of the first ram air outlet and a plane of the second ram air outlet form a V-shape; and a tube assembly positioned at the first ram air outlet and the second ram air outlet, wherein the tube assembly includes a first plurality of tubes positioned within the first ram air flow path and a second plurality of tubes positioned within the second ram air flow path, and wherein the plurality of tubes is configured to flow the engine bleed air.

In another example, a method of manufacturing a precooler includes: positioning a tube assembly at a first cooling fluid outlet of a precooler housing; and positioning the second tube assembly at a second cooling fluid outlet of the precooler housing, wherein the housing defines: a cooling fluid inlet and the first cooling fluid outlet defining a first cooling fluid flow path; and the cooling fluid inlet and the second cooling fluid outlet defining a second cooling fluid flow path, wherein a plane of the first cooling fluid outlet and a plane of the second cooling fluid outlet form a V-shape, wherein the tube assembly comprises a first plurality of tubes positioned within the first cooling fluid flow path, wherein the tube assembly comprises a second plurality of tubes positioned within the second fluid flow path, wherein the first plurality of tubes and the second plurality of tubes are configured to flow a target fluid, and wherein the first fluid flow path and the second fluid flow path are configured to flow a cooling fluid.

In another example, a method includes: receiving a target fluid at a target fluid inlet of a precooler; receiving a cooling fluid at a cooling fluid inlet of the precooler; and cooling, via the precooler, the target fluid via transfer of heat from the target fluid to the cooling fluid, wherein the precooler includes: a housing includes a cooling fluid inlet and a first cooling fluid outlet defining a first cooling fluid flow path; and the cooling fluid inlet and a second cooling fluid outlet defining a second cooling fluid flow path, wherein a plane of the first cooling fluid outlet and a plane of the second cooling fluid outlet form a V-shape; and a tube assembly positioned at the first cooling fluid outlet and the second cooling fluid outlet, wherein the tube assembly includes a first plurality of tubes positioned within the first cooling fluid flow path and a second plurality of tubes positioned within the second cooling fluid flow path, and wherein the plurality of tubes is configured to flow the target fluid. The details of one or more examples are set forth in the accompanying drawings and the description below.

Other features, objects, and advantages will be apparent from the description and drawings, and from the claims.

### BRIEF DESCRIPTION OF THE DRAWINGS

The details of one or more examples are set forth in the accompanying drawings and the description below. Other features, objects, and advantages will be apparent from the description and drawings, and from the claims.
FIG. 1 is a perspective view diagram illustrating an example system for including a precooler, in accordance with examples of the present disclosure.
FIG. 2 is a perspective view illustrating an example precooler, in accordance with examples of the present disclosure.
FIG. 3 is a front view of the example precooler of FIG. 1, in accordance with examples of the present disclosure.
FIG. 4 is a bottom view of the example precooler of FIG. 1, in accordance with examples of the present disclosure.
FIG. 5 is a side view of the example precooler of FIG. 1, in accordance with examples of the present disclosure.
FIG. 6 is a perspective view illustrating another example precooler, in accordance with examples of the present disclosure.
FIG. 7 is a perspective view illustrating another example precooler, in accordance with examples of the present disclosure.
FIG. 8 is a flowchart of an example method of precooling a target fluid, in accordance with examples of the present disclosure.
FIG. 9 is a flowchart of an example method of manufacturing a precooler, in accordance with examples of the present disclosure.

### DETAILED DESCRIPTION

Precoolers for aircraft engines may be heavy, relatively large, and need to be positioned within a restricted volume, e.g., within or near the engine without impeding engine performance and positioned along with other structures supporting engine function, e.g., pipes, tubes, electrical and/or pneumatic cabling, structure support beams, and the like. Additionally, a precooler may need to be robust (e.g., with relatively low degradation of components and/or performance) with respect to thermal cycling and mechanical cycling, e.g., low cycle fatigue from thermal cycling via increase and decrease in the temperature of a precooler and/or precooler components such as during flight cycles, fatigue due to low frequency mechanical vibrations such as from engine start up, thrust from the engine during certain flight phases such as takeoff, landing, climbing, descending, or the like, and/or fatigue due to high cycle fatigue due to high frequency mechanical vibrations.

Also, precoolers need enough surface area, e.g., to receive the cooling and target fluids as well as to surface area for bringing the cooling and target fluids in thermal contact with each other (e.g., via an intermediate material such as a tube wall) to meet heat load and outlet temperature requirements. Precoolers may also need to have a substantially low pressure drop between the inlet and the outlet of the cooling fluid flow path, e.g., to avoid affecting performance of components downstream, such as a downstream heat exchanger . For example, the precooler may use ambient air and/or RAM air as the cooling fluid, which may constrain the pressure drop between the cooling fluid inlet and cooling fluid outlet.

In general, this disclosure describes a precooler and methods of making and/or using a precooler. Aspects of this disclosure describe a precooler with reduced size and weight, and that is shaped to fit within a restricted volume, which may be enabled by modifying the flow paths for the hot and cooling fluids (e.g., air and a cooling fluid) of the precooler. In some examples, the precooler may be configured to be positioned within a pylon attaching an aircraft engine to a wing or fuselage of an aircraft.

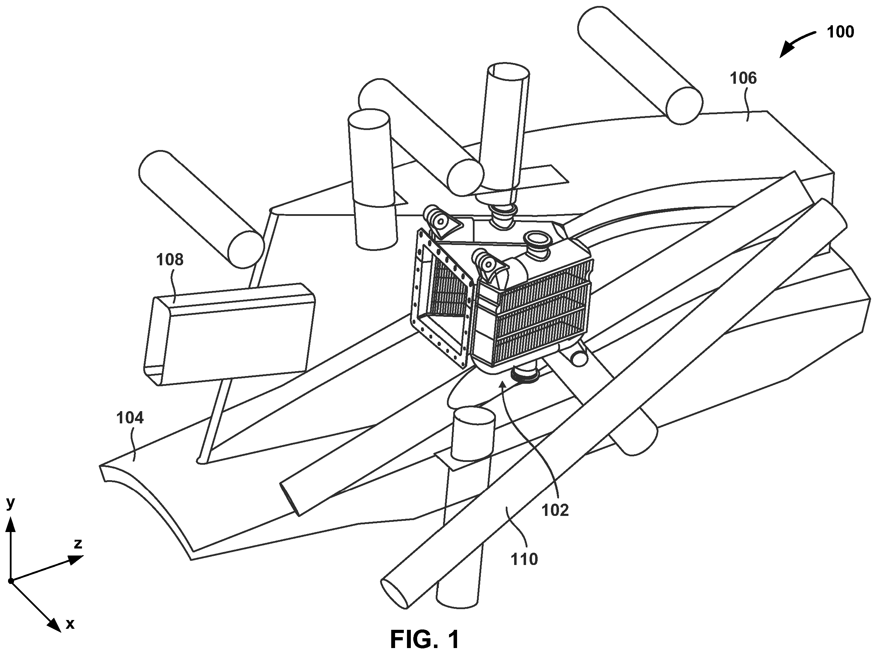

FIG. 1 is a perspective view diagram illustrating an example system 100 for incorporating a precooler 102, in accordance with examples of the present disclosure. In the example shown, system 100 includes precooler 102, an engine 104, a pylon 106, a pylon inlet 108, and struts 110. Engine 104 may be mechanically coupled to a wing or fuselage (not shown) of an aircraft by pylon 106 and/or struts 110. For example, pylon 106 may comprise a housing or shroud defining a pylon volume that may include at least a portion of struts 110 and other components such as wiring, mechanical or pneumatic tubing and/or devices, and precooler 102. Pylon 106 may be configured to provide an aerodynamic and/or protective housing or shroud to enclose the components positioned within the pylon volume. In some examples, struts 110 are configured to attach and support engine 104 and components within the pylon volume of pylon 106. In some examples, engine 104 may be an aircraft engine, e.g., a jet engine, a turbojet engine, a turboprop engine, a turbofan engine, or the like.

A front surface of pylon 106 may interface with fan air discharged between engine 104 and a fan casing of the aircraft (not shown), creating drag. This drag may be directly related to a width of pylon 106, such that reducing the width of pylon 106 may reduce the drag caused by pylon 106. However, this width may be limited by the shape and size of components housed within pylon 106, including a width of precooler 102. As such, precooler 102 may have a reduced width that enables a smaller and/or more aerodynamic pylon 106.

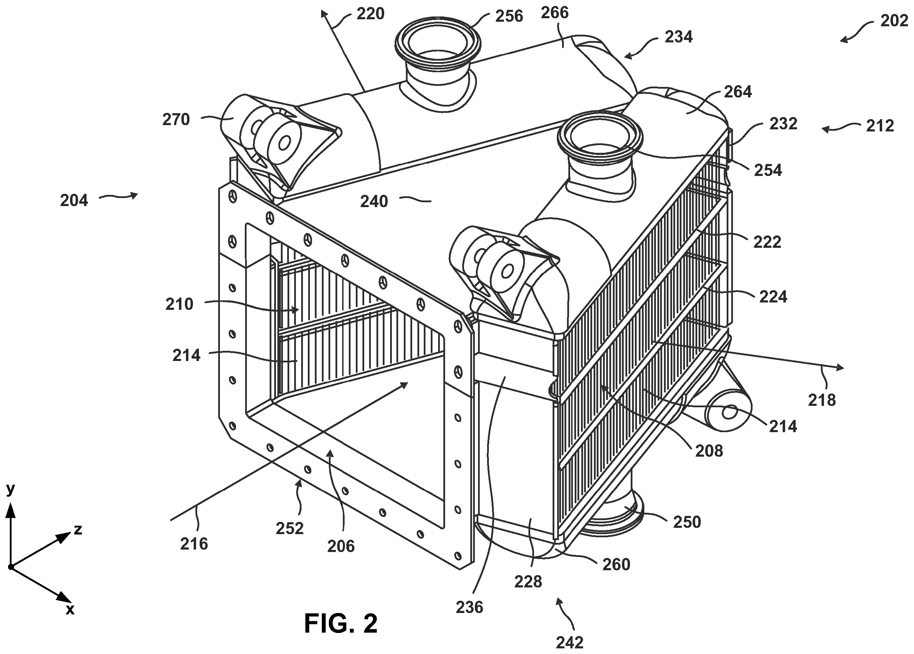

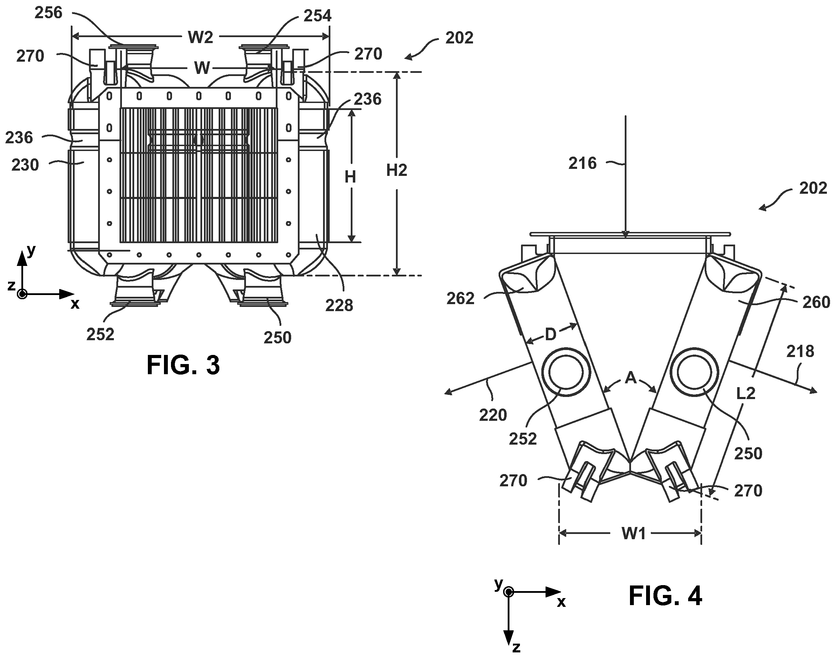

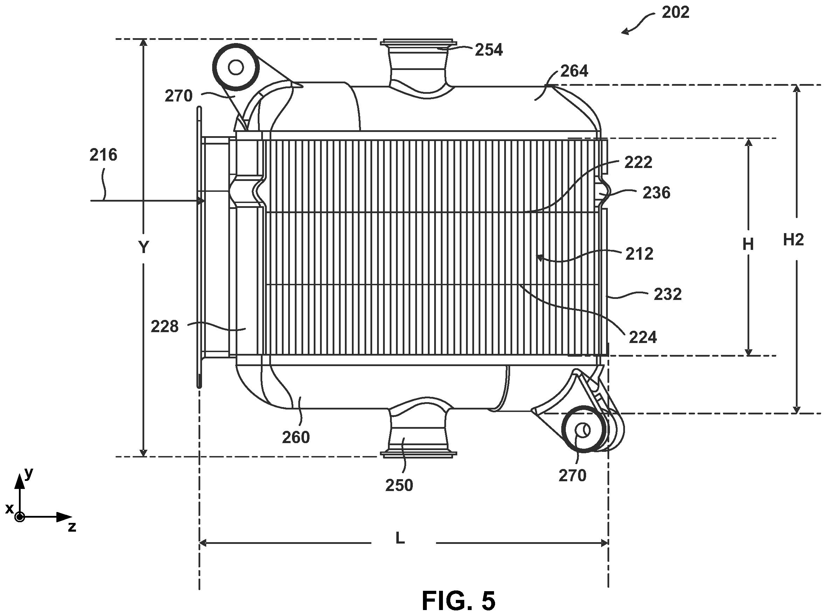

FIGS. 2-5 illustrate an example precooler 202, such as for precooler 102 of FIG. 1, and will be described together below. FIG. 2 is a perspective view illustrating an example precooler 202, FIG. 3 is a front view of the example precooler 202 of FIG. 2, FIG. 4 is a bottom view of the example precooler 202 of FIG. 2, and FIG. 5 is a side view of the example precooler 202 of FIG. 2, in accordance with examples of the present disclosure. In the example shown, precooler 202 includes housing 204 defining a cooling fluid inlet 206, a first cooling fluid outlet 208, and a second cooling fluid outlet 210. Precooler 202 also includes tube assembly 212 comprising a first plurality of tubes 214 positioned within the first cooling fluid outlet 208 and a second plurality of tubes 214 positioned within the second cooling fluid outlet 210. In the examples shown, housing 204 may define first cooling outlet 208 having a cross-sectional area in a first plane and second cooling outlet 210 having a cross-sectional area in a second plane, and housing 204 may define the first and second outlets 208, 210 such that the first and second planes form a V-shape.

Housing 204 may be made of a metal, e.g., aluminum, steel, copper, Inconel^{®}, stainless steel, titanium, superalloys, nickel-tungsten alloys, or the like. Housing 204 may also include portions made of different materials, e.g., ceramics, plastics, or the like. In the example shown, housing 204 includes mounting structures 270. Mounting structures 270 may be configured to mount and/or attach precooler 202 to any or all of struts 110, engine 104, pylon 106 or a wing of an aircraft. For example, precooler 202 may be configured to be mounted within pylon 106 via mounting structures 270.

Housing 204 defines cooling fluid inlet 206 configured to receive a cooling fluid, such as ambient air and/or RAM air from pylon inlet 108 and/or from engine 104, e.g., cooling fluid flow path 216. For example, cooling fluid inlet 206 and cooling fluid outlet 208 may define a first cooling fluid flow path 218 (e.g., segment 218) and cooling fluid inlet 206 and cooling fluid outlet 210 may define a second cooling fluid flow path 220 (e.g., segment 220).

In the example shown, housing 204 defines cooling fluid inlet 206 opposite the vertex of the V-shape, e.g., along a length direction substantially perpendicular to a plane defined by cooling fluid inlet 206, e.g., in the z-direction as shown. In some examples, precooler 202 and/or cooling fluid inlet 206 may be constrained in width, e.g., in the x-direction. For example, the overall width W (FIG. 3) of precooler 202 may be constrained by pylon 106, and or a component positioned within pylon 106, e.g., one or more struts 110. In the example shown, housing 204 defines first cooling fluid outlet 208 and second cooling fluid outlet 210 to be along respective sides of the V-shape.

In some examples, housing 204 defines cooling fluid inlet 206, first cooling fluid outlet 208, and second cooling fluid outlet 210 such that a direction of flow of the first cooling fluid flow path 218 at the first cooling fluid outlet 208 is different from a direction of flow of the cooling fluid flow path 216 at the cooling fluid inlet 206 by 90 degrees minus half the vertex angle of the V-shape and a direction of flow of the second cooling fluid flow path 220 at the second cooling fluid outlet 210 is different from a direction of flow of the cooling fluid flow path 216 at the cooling fluid inlet 216 by 90 degrees minus half the vertex angle of the V-shape. That is, the direction of cooling fluid flow at cooling fluid inlet 206 may bisect the direction the vertex angle of the V-shape.

Tube assembly 212 may comprise a plurality of tubes 214, and a first plurality of tubes 214 may be positioned within the first fluid flow path 218, e.g., within the cross-sectional area of first cooling fluid outlet 208. A second plurality of tubes 214 may be positioned within the second fluid flow path 220, e.g., within the cross-sectional area of second cooling fluid outlet 220. Tubes 214 may be made of a metal, e.g., aluminum, steel, copper, Inconel^{®}, stainless steel, titanium, superalloys, nickel-tungsten alloys, or the like.

Tube assembly 212 may be configured to flow the target fluid, e.g., the hot fluid targeted to be cooled and/or used in an application. For example, each tube 214 of the plurality of tubes may define a lumen configured to flow the target fluid within the lumen. In some examples, each tube 214 may be a microtube having a diameter of less than or equal to about 10 millimeters (mm), or less than or equal to about 5 mm, or less than or equal to about 2 mm, or less than or equal to about 1 mm. In some examples, the wall thickness of each of tubes 214 is configured to be substantially thin but also be robust to low and/or high frequency vibrations as well as thermal expansion and contraction. In some examples, the tube wall thickness of each tube 214 of tube assembly 212 may be less than or equal to 30 percent (%) of diameter of the tube 214, or less than or equal to 25% of the diameter of the tube 214, or less than or equal to 10% of the diameter of the tube 214, or less than or equal to 5% of the diameter of the tube 214. In some examples, the spacing between adjacent tubes 214 may about from about 1 tube 214 diameter to about 3 tube 214 diameters, and may be arranged such that the tubes 214 are in-line or are staggered.

Tube assembly 212 may be configured to allow the cooling fluid to flow through the first and second cooling fluid outlets 208, 210 along first and second fluid flow paths 218, 220. For example, each tube of the plurality of tubes 214 may be spaced to allow RAM air to flow. In some examples, the spacing between adjacent tubes of tube assembly 212 may be less than or equal to 20 mm, or less than or equal to 10 mm, or less than or equal to 5 mm, or less than equal to 2 mm, or less than or equal to about 1 mm. In some examples, tube assembly 212 may comprise tube spacings between tubes 214 configured to have a substantially low pressure drop from a pressure just upstream from cooling fluid inlet 206 to a pressure just downstream from first and/or second cooling fluid outlets 208, 210.

In the example shown, tube assembly 212 includes tube supports 222, 224. Tube supports 222, 224 may be configured to maintain the shapes and positions of each tube 214 of tube assembly 212, e.g., to prevent shifting and/or buckling of tubes 214. In the example shown, tube support 222 is at a first position along the longitudinal length of tubes 214, and tube support 224 is at a second position along the longitudinal length of tubes 214. Tube assembly 212 may include tube supports 222, 224 configured to support the first plurality of tubes 214 positioned within the first cooling fluid flow path 218 (e.g., at first cooling fluid outlet 208) and include tube supports 222, 224 configured to support the second plurality of tubes 214 positioned within the second cooling fluid flow path 220 (e.g., at second cooling fluid outlet 210). Tube supports 222, 224 may be made of a metal, e.g., aluminum, steel, copper, Inconel^{®}, stainless steel, titanium, superalloys, nickel-tungsten alloys, or the like, and/or a plastic or polymer, and/or a ceramic, or any material suitable to support tubes 214.

Precooler 202 may comprise thermally expanding side plates 226, 228, 230, and 232 attached to housing 204 and configured to allow housing 204 and tube assembly 212 to expand and/or contract between a first end 240 of the tube assembly 212 and a second end 242 of the tube assembly 212, e.g., in the z-direction as shown. In some examples, side plates 226, 228, 230, and 232 may comprise a material configured to be at least partially flexible in a direction between the first end 240 and the second end 242, e.g., the top and bottom portions of housing 204. In some examples, side plates 226, 228, 230, and 232 may comprise a metal such as copper. In some examples, side plates 226, 228, 230, and 232 may comprise the same material as tubes 214 of tube assembly 212. In some examples, side plates 226, 228, 230, and 232 may comprise one or features enabling side plates 226, 228, 230, and 232 to expand and/or contract in the direction between first and second ends 240, 242, e.g., bump-out 236. For example, bump-out 236 may be configured to flex, e.g., in the z-direction, in order to allow and/or enable side plates 226, 228, 230, and 232 to move, expand, and/or contract in the y-direction.

In some examples, the first and second fluid flow paths may be fluidically separate from each other. For example, precooler 202 includes first target fluid inlet 250, second target fluid inlet 252 (FIGS. 3, 4), first target fluid outlet 254, and second target fluid outlet 256. First target fluid inlet 250 and first target fluid outlet 254 may be fluidically couple the first plurality of tubes 214, e.g., at first cooling fluid outlet 208, and may define a first target fluid flow path. Second target fluid inlet 252 and second target fluid outlet 256 may be fluidically couple the second plurality of tubes 214, e.g., at second cooling fluid outlet 208, and may define a second target fluid flow path. For example, housing 204 may define tube 260 fluidically coupled to first target fluid inlet 250 and the first plurality of tubes 214 and configured to distribute the target fluid to the first plurality of tubes 214, e.g., positioned within first cooling fluid outlet 208. Housing 204 may define tube 264 fluidically coupled to first target fluid outlet 254 and the first plurality of tubes 214 and configured to receive the target fluid from the first plurality of tubes 214. Housing 204 may define tube 262 fluidically coupled to second target fluid inlet 252 and the second plurality of tubes 214 and configured to distribute the target fluid to the second plurality of tubes 214, e.g., positioned within second cooling fluid outlet 210. Housing 204 may define tube 266 fluidically coupled to second target fluid outlet 256 and the second plurality of tubes 214 and configured to receive the target fluid from the second plurality of tubes 214. In the examples shown, precooler 202 includes first and second target fluid inlets 250, 252 and first and second target fluid outlets 254, 256 that are positioned to bisect the length of tubes 260-266, respectively, (e.g., length L2 as shown in FIG. 4) and that bisect the length of first and second cooling fluid outlets 208, 210, respectively.

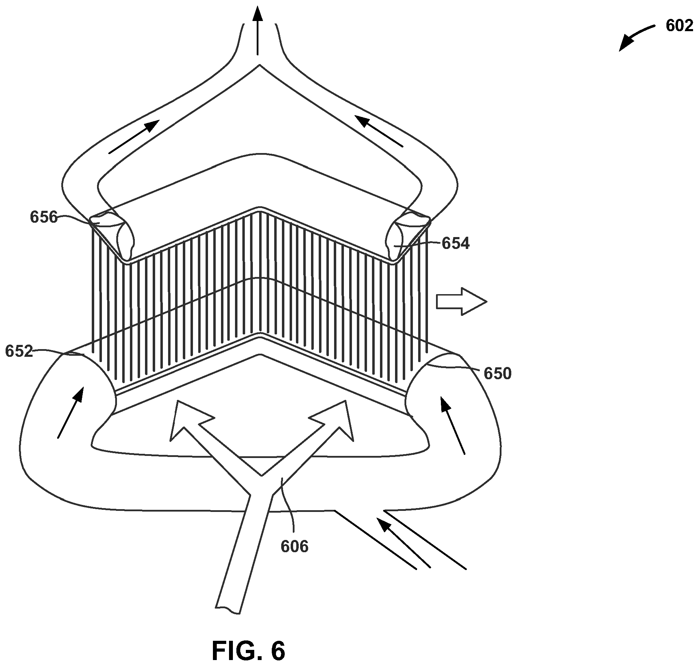

In some examples, the precoolers disclosed here, e.g., precooler 202 and/or precoolers 602, 702 of FIGS. 6-7, may be configured to, relative to conventional precoolers such as plate fin precoolers, reduce weight and improve thermal cycling and mechanical robustness as well has reduce the size and/or conform the shape of the precooler, e.g., so as to fit within a constrained volume such as an aircraft engine pylon 106. In some examples, precoolers disclosed herein also may be configured to reduce the pressure drop of the cooling fluid between the cooling fluid inlet(s) and cooling fluid outlet(s) of the precooler.

For example, tube assembly 212 may comprise a plurality of microtubes 214, which may reduce the weight of precooler 202, e.g., relative to a plate fin precooler or other conventional tube precoolers. For example, tube assembly 212 comprising a plurality of microtubes may increase the amount of precooler prime surface area, e.g., the surface area of the material through which thermal energy is transferred between the cooling and target fluids. In contrast, plate fins of some conventional precoolers have extended surfaces such that a portion of the plate fin in not prime thermal energy transfer surface area and contributes to added size and weight without contributing to thermal energy transfer. In some examples, greater than or equal to 75% of the surface area of tube assembly 212 is prime surface area, or greater than or equal to 90% of the surface area of tube assembly 212 is prime surface area, or greater than or equal to 95% of the surface area of tube assembly 212 is prime surface area, or greater than or equal to 99% of the surface area of tube assembly 212 is prime surface area, or substantially all (e.g., 100%) of the surface area of tube assembly 212 is prime surface area.

In the example shown in FIGS. 2-5, precooler 202 has an overall width (in the x-direction) of W2 at the front end including cooling fluid inlet 206, an overall width W2 at the rear end, e.g., the vertex end of the V-shape, and overall height (in the y-direction) of H2, and an overall length L (FIG. 5, in the z-direction, which also may be the of the cooling fluid at cooling fluid inlet 206, e.g., direction of RAM air and/or opposite the direction of travel of the aircraft). In some examples, W2 may be from about 200 mm to about 700 mm, or may be about 475 mm, W1 may be from about 50 mm to about 300 mm, or may be about 150 mm, H2 may be from about 200 mm to about 700 mm, or may be about 400 mm, and L may be from about 200 mm to about 1000 mm, or may be about 350 mm. In the examples shown, cooling fluid inlet may have a width W and a height H. Precooler 202 may have a width W from about 200 mm to about 500 mm, and may be about 340 mm, and a height H from about 200 mm to about 500 mm, and may be about 200 mm or about 300 mm. In the examples shown, tubes 260-266 have a length L2 and a width D (FIG. 4). In some examples, length L2 may be from about 200 mm to about 700 mm, or may be about 325 mm, or may be about 475 mm, and width D may be from 20 mm to about 150 mm, or may be about 80 mm.

In some examples, precoolers disclosed herein may be segmented precoolers. For example, first cooling fluid flow path 218 and second cooling fluid flow path 218 may be different segments configured to have different fluid flow characteristics and/or thermal transfer optimization within each segment. For example, the material, size, and/or spacings of tubes 214 of first cooling fluid flow path 218 may be different from second cooling fluid flow path 218. In other examples, the material, size, and/or spacings of tubes 214 of first cooling fluid flow path 218 may be the same as second cooling fluid flow path 218, and the segments of precooler 202 provide different flow directions for the cooling fluid exiting precooler 202.

In some examples, the V-shape of precoolers disclosed herein may increase the prime thermal energy transfer area, e.g., relative to a non-V-shaped precooler. For example, the V-shape of precoolers disclosed herein may increase the prime surface area so as to satisfy a heat load and/or temperature requirement of the target fluid. In some examples, the V-shape of precoolers disclosed herein may reduce the pressure drop of the cooling fluid between the cooling fluid inlet, e.g., cooling fluid inlet 206, and cooling fluid outlets, e.g., cooling fluid outlets 208, 210, while still meeting a heat lead requirement and reducing the overall length, e.g., in the z-directs as shown in FIG. 2 for precooler 202.

Reducing the pressure drop may avoid affecting performance of components downstream, such as a downstream heat exchanger, and/or may increase the cold flow of the cooling fluid, e.g., along cooling fluid flow paths 206, 218, and/or 220. Generally, the longer the length of the cooling fluid flow path and/or the target fluid flow path, the higher the pressure drop between the inlet(s) and outlet(s) of the cooling fluid flow path and/or the pressure drop between the inlet(s) and outlet(s) of the target fluid flow path of a conventional precooler. For example, for precooler 202 the cold fluid flow length of the cooling fluid may generally be in the z-direction, e.g., substantially perpendicular to cooling fluid inlet 206, the target fluid flow length may generally be in the y-direction, e.g., because of the arrangement of tube assembly 212, and the x-direction length, e.g., the width W2 (FIG. 3) of cooling fluid inlet 206 may be a "no-flow direction." In order to fit within the constraint of an aerodynamic pylon 106, precooler 202 may have a first width W1 (FIG. 4) at the back end (e.g., end including side plates 232, 234) and a second width W2 (FIG. 3) that is larger than W1, e.g., increasing the "no flow" width of precooler 202 relative to a precooler that has the same volume including tubes 212 but is arranged as a cuboid rather than the V-shape of precooler 202. For example, a cuboid precooler having width W2 may have a large heat transfer capacity, but may be too large to fit within pylon 106 at the back end, and a cuboid precooler having a width W1 may fit within pylon 106 at both the front and back ends, but may have too large of a pressure drop for the cooling fluid without enough cold fluid flow to meet a target heat transfer capacity and target fluid temperature requirement. The V-shape of precooler 202, relative to a cuboid precooler, may retain the width W1 at the back end and satisfy the size constraint, and extend the width at the front end to W2 via the V-shape without increasing the weight of precooler 202 (relative to a W1 width cuboid precooler) and increasing the cooling fluid flow amount (e.g., mass) without increasing the cooling fluid pressure drop by not filling in the extra volume of precooler 202 (relative to a W1 width cuboid precooler) with extra tubes 214. The larger W2 width at the front end of precooler 202 may also satisfy the size constraint (e.g., fit within pylon 106) at the front end of precooler 202. Stated differently, the cooling volume of precooler 202 including tubes 214 may stay the same as a W1 width cuboid having the same length and height, but the overall volume of precooler 202 may increase via the V-shape while still satisfying the size constraint, and the overall increase in volume (relative to the W1 width cuboid) may maintain or reduce the cooling fluid pressure drop while increasing the flow (e.g., mass per time) of the cooling fluid thereby increasing the thermal transfer of precooler 202, without substantially increasing the weight of precooler 202 (e.g., relative to a W1 width precooler). A cuboid precooler having a width larger than W1 simply would not fit within pylon 106 or would need to have a shorter length, negating the benefit of increasing the width beyond W1.

In some examples, the cooling fluid may be ambient air and/or RAM air, and the target fluid may be bleed air from an aircraft engine. In some examples, the RAM air may be discharged to the engine 104 core, e.g., from first and second cooling fluid outlets 208, 210. In some examples, the RAM air may be from engine 104, e.g., from a pre-compression stage or non-compression flow path and received at cooling fluid inlet 206.

FIG. 6 is a perspective view illustrating another example precooler 602, in accordance with examples of the present disclosure. Precooler 602 may be substantially similar to precooler 202 described above, except that precooler 602 includes a different positioning of first and second target fluid inlets 650, 652 and first and second target fluid outlets 654, 656. For example, precooler 602 includes first and second target fluid inlets 650, 652 positioned at the front end of tubes 250, 252 and first and second target fluid outlets 654, 656 positioned at the front end of tubes 254, 256, e.g., the end of precooler 602 at cooling fluid inlet 606.

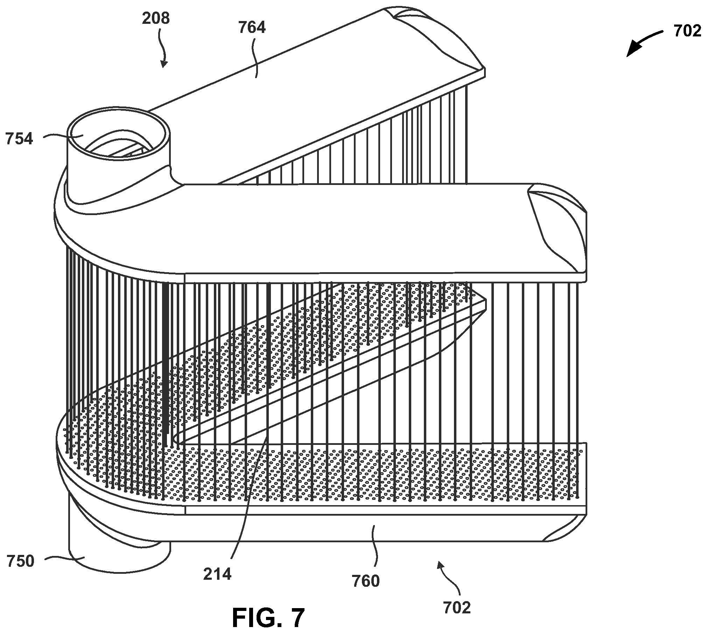

FIG. 7 is a perspective view illustrating another example precooler 702, in accordance with examples of the present disclosure. Precooler 702 may be substantially similar to precooler 202 described above, except that precooler 702 includes a different target fluid inlet/outlet scheme. For example, precooler 702 includes a target fluid inlet 750 positioned at the vertex of the V-shape and a target fluid outlet 754 positioned at the vertex of the V-shape. For example, precooler 702 may include target fluid inlet 750 fluidically coupled to both the first plurality of tubes 214 at first cooling fluid outlet 208 and the second plurality of tubes 214 at second cooling fluid outlet 210. In some examples, the first and second plurality of tubes may no longer be segmented for the target fluid, e.g., the target fluid entering target fluid inlet 750 and exiting target fluid outlet 754 may flow through a tube 214 positioned either in first cooling fluid outlet 208 or second cooling fluid outlet 210. In some examples, tube 760 may be substantially similar to a fluidically coupled version of tubes 260 and 262, and tube 764 may be substantially similar to a fluidically coupled version of tubes 264 and 266.

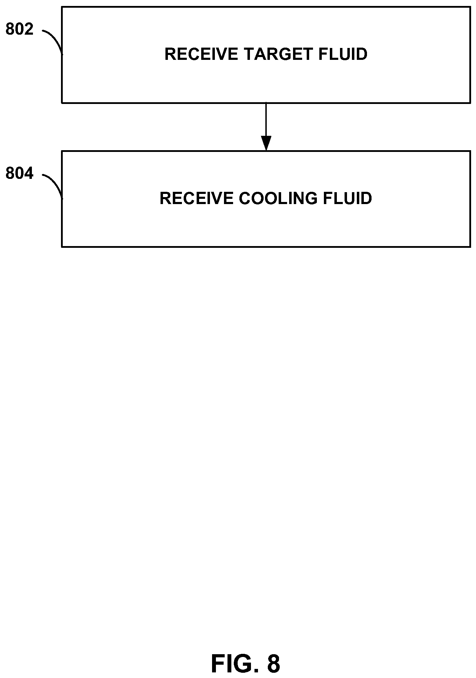

FIG. 8 is a flowchart of an example method of precooling a target fluid, in accordance with examples of the present disclosure. FIG. 8 is described with reference to precoolers 202, 602, and/or 702 of FIGS. 1-7. However, the techniques of FIG. 8 may be utilized with different precoolers and/or systems.

A target fluid may be received at a target fluid inlet 250, 252 of a precooler 202 (802), and a cooling fluid may be received at a cooling fluid inlet 206 of the precooler 202. For example, cooling fluid inlet 206 may be fluidically coupled to a cooling fluid flow path 216, 320 to receive RAM air, and target fluid inlets 250, 252 may be fluidically coupled to a bleed air flow path to receive bleed air from engine 104. Heat and/or thermal energy may be transferred between the target fluid and cooling fluid within precooler 202.

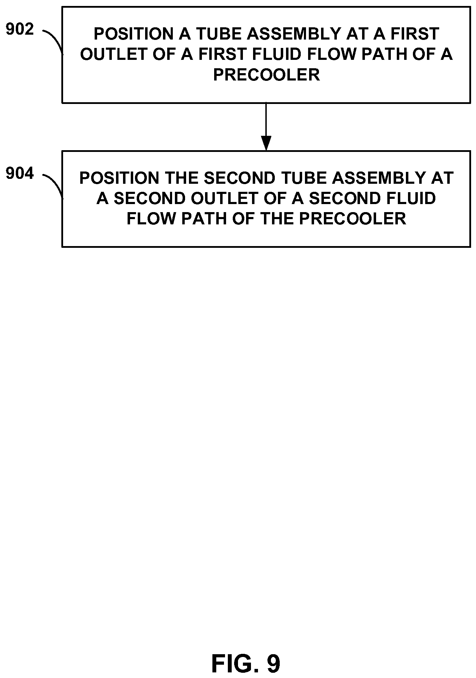

FIG. 9 is a flowchart of an example method of manufacturing a precooler, in accordance with examples of the present disclosure. FIG. 9 is described with reference to precoolers 202, 602, and/or 702 of FIGS. 1-7. However, the techniques of FIG. 9 may be utilized with different precoolers and/or systems.

A manufacturer may position a tube assembly 212 at a first cooling fluid outlet 208 of a precooler housing 204 (902), and the manufacturer may position the tube assembly 212 at a second cooling fluid outlet 210 of the precooler housing 204 (904). For example, the manufacturer may position a first plurality of tubes 214 within cooling fluid outlet 208 and a second plurality of tubes 214 within cooling fluid outlet 210 at an angle relative to each other to form a V-shape.

Select examples of the present disclosure include, but are not limited to, the following examples.

Example 1: A precooler for cooling a target fluid with a cooling fluid includes: a housing defining: a cooling fluid inlet and a first cooling fluid outlet defining a first cooling fluid flow path; and the cooling fluid inlet and a second cooling fluid outlet defining a second cooling fluid flow path, wherein a plane of the first cooling fluid outlet and a plane of the second cooling fluid outlet form a V-shape; and a tube assembly positioned at the first cooling fluid outlet and the second cooling fluid outlet, wherein the tube assembly includes a first plurality of tubes positioned within the first cooling fluid flow path and a second plurality of tubes positioned within the second cooling fluid flow path, and wherein the plurality of tubes is configured to flow the target fluid.

Example 2: The precooler of example 1, further including a thermally expanding side plate attached to the housing and configured to allow the housing and tube assembly to expand between a first end of the tube assembly and a second end of the tube assembly.

Example 3: The precooler of example 1 or example 2, wherein the first plurality of tubes and the second plurality of tubes each includes microtubes having a diameter of less than or equal to 5 millimeters (mm).

Example 4: The precooler of any one of examples 1 through 3, wherein the precooler is configured to be mounted within a pylon of an engine.

Example 5: The precooler of example 4, wherein cooling fluid inlet is opposite the vertex of the V-shape and constrained in width by the pylon, wherein the first cooling fluid outlet and the second cooling fluid outlets are along respective sides of the V-shape.

Example 6: The precooler of example 5, wherein a direction of flow of the first cooling fluid flow path at the first cooling fluid outlet is different from a direction of flow of the first fluid flow path at the cooling fluid inlet by 90 degrees minus half the vertex angle of the V-shape, wherein a direction of flow of the second cooling fluid flow path at the second cooling fluid outlet is different from a direction of flow of the second fluid flow path at the cooling fluid inlet by 90 degrees minus half the vertex angle of the V-shape.

Example 7: The precooler of any one of examples 4 through 6, wherein the target fluid includes engine bleed air, wherein the cooling fluid includes engine ram air.

Example 8: The precooler of any one of examples 1 through 7, further including: a target fluid inlet fluidically coupled to the first plurality of tubes and the second plurality of tubes; and a target fluid outlet fluidically coupled to the first plurality of tubes and the second plurality of tubes.

Example 9: The precooler of any one of examples 1 through 8, wherein the target fluid inlet of the tube assembly and the target fluid outlet of the tube assembly are positioned at a vertex of the V-shape.

Example 10: The precooler of any one of examples 1 through 9, further including: a first target fluid inlet fluidically coupled to the first plurality of tubes and a first target fluid outlet fluidically coupled to the first plurality of tubes, the first target fluid inlet, the first plurality of tube, and the first target fluid outlet defining a first target fluid flow path; and a second target fluid inlet fluidically coupled to the second plurality of tubes and a second target fluid outlet fluidically coupled to the second plurality of tubes, the second target fluid inlet, the second plurality of tube, and the second target fluid outlet defining a second target fluid flow path, wherein the first target fluid flow path and the second target fluid flow path are fluidically separate from each other.

Example 11: A system includes: an engine; and a precooler for cooling engine bleed air with ram air includes a housing includes a ram air inlet and a first ram air fluid outlet defining a first ram air fluid flow path; and the ram air inlet and a second ram air outlet defining a second ram air flow path, wherein a plane of the first ram air outlet and a plane of the second ram air outlet form a V-shape; and a tube assembly positioned at the first ram air outlet and the second ram air outlet, wherein the tube assembly includes a first plurality of tubes positioned within the first ram air flow path and a second plurality of tubes positioned within the second ram air flow path, and wherein the plurality of tubes is configured to flow the engine bleed air.

Example 12: The system of example 11, further including a thermally expanding side plate attached to the housing and configured to allow the housing and tube assembly to expand between a first end of the tube assembly and a second end of the tube assembly.

Example 13: The system of example 11 or example 12, wherein the first plurality of tubes and the second plurality of tubes each includes microtubes having a diameter of less than or equal to 5 millimeters (mm).

Example 14: The system of any one of examples 11 through 13, further including: an engine pylon configured to attach the engine to the wing of an aircraft, the engine pylon including a pylon housing configured to house structural supports attaching the engine to the wing, wherein the precooler is positioned within the pylon housing.

Example 15: The system of example 14, wherein ram air inlet is opposite the vertex of the V-shape and constrained in width by the structural supports, wherein the first ram air outlet and the second ram air outlet are each along respective sides of the V-shape, wherein the ram air inlet is facing a same direction as an engine air inlet, wherein the ram air outlet is fluidically coupled to an exhaust chamber of the engine.

Example 16: The system of example 15, wherein a direction of flow of the first cooling fluid flow path at the first cooling fluid outlet is different from a direction of flow of the first fluid flow path at the cooling fluid inlet by 90 degrees minus half the vertex angle of the V-shape, wherein a direction of flow of the second cooling fluid flow path at the second cooling fluid outlet is different from a direction of flow of the second fluid flow path at the cooling fluid inlet by 90 degrees minus half the vertex angle of the V-shape.

Example 17: The system of any one of examples 1 through 16, further including: a bleed air inlet fluidically coupled to the first plurality of tubes and the second plurality of tubes; and a bleed air outlet fluidically coupled to the first plurality of tubes and the second plurality of tubes.

Example 18: The system of any one of examples 1 through 17, wherein the bleed air inlet of the tube assembly and the bleed air outlet of the tube assembly are positioned at a vertex of the V-shape.

Example 19: The system of any one of examples 1 through 18, further including: a first bleed air inlet fluidically coupled to the first plurality of tubes and a first bleed air outlet fluidically coupled to the first plurality of tubes, the first bleed air inlet, the first plurality of tube, and the first bleed air outlet defining a first bleed air flow path; and a second bleed air inlet fluidically coupled to the second plurality of tubes and a second bleed air outlet fluidically coupled to the second plurality of tubes, the second bleed air inlet, the second plurality of tube, and the second bleed air outlet defining a second bleed air flow path, wherein the first bleed air flow path and the second bleed air flow path are fluidically separate from each other.

Example 21. A method of manufacturing a precooler, the method comprising: positioning a tube assembly at a first cooling fluid outlet of a precooler housing; and positioning the second tube assembly at a second cooling fluid outlet of the precooler housing, wherein the housing defines: a cooling fluid inlet and the first cooling fluid outlet defining a first cooling fluid flow path; and the cooling fluid inlet and the second cooling fluid outlet defining a second cooling fluid flow path, wherein a plane of the first cooling fluid outlet and a plane of the second cooling fluid outlet form a V-shape, wherein the tube assembly comprises a first plurality of tubes positioned within the first cooling fluid flow path, wherein the tube assembly comprises a second plurality of tubes positioned within the second fluid flow path, wherein the first plurality of tubes and the second plurality of tubes are configured to flow a target fluid, and wherein the first fluid flow path and the second fluid flow path are configured to flow a cooling fluid.

Example 21: A method including: receiving a target fluid at a target fluid inlet of a precooler; receiving a cooling fluid at a cooling fluid inlet of the precooler; and cooling, via the precooler, the target fluid via transfer of heat from the target fluid to the cooling fluid, wherein the precooler includes: a housing includes a cooling fluid inlet and a first cooling fluid outlet defining a first cooling fluid flow path; and the cooling fluid inlet and a second cooling fluid outlet defining a second cooling fluid flow path, wherein a plane of the first cooling fluid outlet and a plane of the second cooling fluid outlet form a V-shape; and a tube assembly positioned at the first cooling fluid outlet and the second cooling fluid outlet, wherein the tube assembly includes a first plurality of tubes positioned within the first cooling fluid flow path and a second plurality of tubes positioned within the second cooling fluid flow path, and wherein the plurality of tubes is configured to flow the target fluid.

Various examples have been described. These and other examples are within the scope of the following claims.

## Claims

1. A precooler for cooling a target fluid with a cooling fluid, the precooler comprising:
a housing defining:
a cooling fluid inlet and a first cooling fluid outlet defining a first cooling fluid flow path; and
the cooling fluid inlet and a second cooling fluid outlet defining a second cooling fluid flow path,
wherein a plane of the first cooling fluid outlet and a plane of the second cooling fluid outlet form a V-shape; and
a tube assembly positioned at the first cooling fluid outlet and the second cooling fluid outlet, wherein the tube assembly comprises a first plurality of tubes positioned within the first cooling fluid flow path and a second plurality of tubes positioned within the second cooling fluid flow path, and wherein the plurality of tubes is configured to flow the target fluid.

2. The precooler of claim 1, further comprising a thermally expanding side plate attached to the housing and configured to allow the housing and tube assembly to expand between a first end of the tube assembly and a second end of the tube assembly.

3. The precooler of claim 1 or 2, wherein the first plurality of tubes and the second plurality of tubes each comprises microtubes having a diameter of less than or equal to 5 millimeters (mm).

4. The precooler of any of claims 1 to 3, wherein the target fluid comprises engine bleed air, wherein the cooling fluid comprises engine ram air.

5. The precooler of any of claims 1 to 4, further comprising:
a target fluid inlet fluidically coupled to the first plurality of tubes and the second plurality of tubes; and
a target fluid outlet fluidically coupled to the first plurality of tubes and the second plurality of tubes.

6. The precooler of any of claims 1 to 5, wherein the target fluid inlet of the tube assembly and the target fluid outlet of the tube assembly are positioned at a vertex of the V-shape.

7. The precooler of any of claims 1 to 6, further comprising:
a first target fluid inlet fluidically coupled to the first plurality of tubes and a first target fluid outlet fluidically coupled to the first plurality of tubes, the first target fluid inlet, the first plurality of tube, and the first target fluid outlet defining a first target fluid flow path; and
a second target fluid inlet fluidically coupled to the second plurality of tubes and a second target fluid outlet fluidically coupled to the second plurality of tubes, the second target fluid inlet, the second plurality of tube, and the second target fluid outlet defining a second target fluid flow path,
wherein the first target fluid flow path and the second target fluid flow path are fluidically separate from each other.

8. A system comprising:
an engine; and
the precooler of any of claims 1 to 7 configured to cool engine bleed air with ram air.

9. The system of claim 8, further comprising an engine pylon configured to attach the engine to the wing of an aircraft, the engine pylon comprising a pylon housing configured to house structural supports attaching the engine to the wing, wherein the precooler is positioned within the pylon housing.

10. The system of claim 9,
wherein the ram air inlet is opposite the vertex of the V-shape and constrained in width by the structural supports,
wherein the first ram air outlet and the second ram air outlet are each along respective sides of the V-shape,
wherein the ram air inlet is facing a same direction as an engine air inlet, and
wherein the ram air outlet is fluidically coupled to an exhaust chamber of the engine.

11. The system of claim 9 or 10,
wherein a direction of flow of the first cooling fluid flow path at the first cooling fluid outlet is different from a direction of flow of the first fluid flow path at the cooling fluid inlet by 90 degrees minus half the vertex angle of the V-shape, and
wherein a direction of flow of the second cooling fluid flow path at the second cooling fluid outlet is different from a direction of flow of the second fluid flow path at the cooling fluid inlet by 90 degrees minus half the vertex angle of the V-shape.

12. The system of any of claims 8 to 11, further comprising:
a bleed air inlet fluidically coupled to the first plurality of tubes and the second plurality of tubes; and
a bleed air outlet fluidically coupled to the first plurality of tubes and the second plurality of tubes.

13. The system of any of claims 8 to 12, wherein the bleed air inlet of the tube assembly and the bleed air outlet of the tube assembly are positioned at a vertex of the V-shape.

14. The system of any of claims 8 to 13, further comprising:
a first bleed air inlet fluidically coupled to the first plurality of tubes and a first bleed air outlet fluidically coupled to the first plurality of tubes, the first bleed air inlet, the first plurality of tube, and the first bleed air outlet defining a first bleed air flow path; and
a second bleed air inlet fluidically coupled to the second plurality of tubes and a second bleed air outlet fluidically coupled to the second plurality of tubes, the second bleed air inlet, the second plurality of tube, and the second bleed air outlet defining a second bleed air flow path,
wherein the first bleed air flow path and the second bleed air flow path are fluidically separate from each other.

15. A method of manufacturing a precooler, the method comprising:
positioning a tube assembly at a first cooling fluid outlet of a precooler housing; and
positioning the second tube assembly at a second cooling fluid outlet of the precooler housing,
wherein the housing defines:
a cooling fluid inlet and the first cooling fluid outlet defining a first cooling fluid flow path; and
the cooling fluid inlet and the second cooling fluid outlet defining a second cooling fluid flow path,
wherein a plane of the first cooling fluid outlet and a plane of the second cooling fluid outlet form a V-shape,
wherein the tube assembly comprises a first plurality of tubes positioned within the first cooling fluid flow path,
wherein the tube assembly comprises a second plurality of tubes positioned within the second fluid flow path,
wherein the first plurality of tubes and the second plurality of tubes are configured to flow a target fluid, and
wherein the first fluid flow path and the second fluid flow path are configured to flow a cooling fluid.
